# EUROPEAN PATENT SPECIFICATION

(11) **EP 4 300 691 B1**
(45) Date of publication and mention of the grant of the patent: **16.09.2026**
(21) Application number: 22929208.1
(22) Date of filing: 16.05.2022
(51) Int. Cl.: H01M 50/30, H01M 50/342, H01M 50/15

(54) **BATTERY**
BATTERIE
BATTERIE

(43) Date of publication of application: 03.01.2024
(73) Proprietor: Contemporary Amperex Technology (Hong Kong) Limited, Central, Central And Western District (HK)
(72) Inventor: ZHOU, Wenlin, Ningde, Fujian 352100 (CN); XU, Liangfan, Ningde, Fujian 352100 (CN); LI, Quankun, Ningde, Fujian 352100 (CN); WANG, Peng, Ningde, Fujian 352100 (CN)
(74) Representative: Gong, Jinping
(86) International application number: PCT/CN2022/093136
(87) International publication number: WO 2023/220886

(56) References cited:
- CN-A- 108 428 836
- CN-A- 112 713 345
- CN-U- 202 395 055
- CN-U- 208 460 852
- CN-U- 216 354 620
- JP-A- 2007 141 518
- US-A1- 2022 013 851
- US-A1- 2022 013 855

## Description

### Technical Field

The present application relates to the field of batteries, and in particular, to a battery as specified in any of claims 1-7.

### Background Art

Batteries are widely used in the field of new energy, such as electric vehicles and new-energy vehicles. New-energy vehicles and electric vehicles have become a new trend in development of the automotive industry. A pressure relief structure for releasing an internal pressure of a battery when the internal pressure reaches an initiation pressure is arranged on an end cap of the battery. However, in the case of an inverted cell, the pressure relief structure is often opened in advance, which leads to the failure to implement a normal pressure relief function.

US 2022/013851 A1 discloses the preamble of claim 1.

### Summary

The claimed subject-matter is defined by the appended claims. An objective of embodiments of the present application is to provide a battery as specified in any of claims 1-7, with a view to solving the problem that a pressure relief structure is often opened in advance in the prior art, leading to the failure to implement a normal pressure relief function.

According to a first aspect, an embodiment of the present application provides a battery, the battery including a case and a battery cell , wherein the battery cell is accommodated inside the case; the battery cell including an electrode assembly, a housing and an end cap, wherein the housing has an accommodation space with one end open, and the accommodation space is used for accommodating the electrode assembly; wherein the end cap is connected to the housing and closes the opening, and the end cap is arranged on a side of the battery cell close to a bottom wall of the case; wherein the end cap including a cap body and a pressure relief groove, wherein the cap body is provided with a pressure relief portion; and the pressure relief groove is provided in the cap body, and the pressure relief groove delimits the pressure relief portion; wherein the pressure relief portion is bent in a thickness direction of the cap body. In the thickness direction, the pressure relief portion has a first surface, the first surface and the pressure relief groove are located on the same side of the pressure relief portion, and the first surface is an arc surface; in the thickness direction, the pressure relief portion has a second surface opposite the first surface, the second surface being an arc surface, and the first surface and the second surface are bent in the same direction; in the thickness direction, the cap body has an inner surface and an outer surface opposite each other; a distance between the pressure relief portion and the inner surface in the thickness direction gradually increases from two ends to the middle of the pressure relief portion in a first direction, and the first direction is perpendicular to the thickness direction; the cap body is provided with a recess which is recessed from the outer surface in a direction close to the inner surface, and the pressure relief groove is provided in a bottom wall of the recess; the end cap includes a first protrusion, and the first protrusion is arranged on the bottom wall in a protruding manner and surrounds the pressure relief groove; and the end cap includes a second protrusion, wherein the second protrusion is arranged on the inner surface in a protruding manner, and the second protrusion corresponds to the recess in position and is arranged around the pressure relief groove.

In the above technical solution, since the pressure relief portion of the end cap is bent in the thickness direction of the cap body, when the end cap is subjected to an external impact, the pressure relief portion may deform in a bending direction, and thus absorb energy of the external impact, so as to reduce the influence of the external impact on the part where the pressure relief groove in the cap body is located, prevent the part where the pressure relief groove in the cap body is located from being damaged due to the external impact to a certain extent, and ensure that a normal pressure relief function can be implemented, that is, prevent the pressure relief portion from being opened when an internal pressure of the battery cell does not reach an initiation pressure to ensure the normal operation of the battery cell.

As an alternative technical solution of the embodiment of the present application, in the thickness direction, the cap body has an inner surface and an outer surface opposite each other, and the pressure relief portion is bent in a direction from the inner surface to the outer surface.

In the above technical solution, the pressure relief portion is arranged to bend in the direction from the inner surface to the outer surface, that is, the pressure relief portion is bent in an opening direction of the pressure relief portion, so that when the end cap is subjected to an external impact, the pressure relief portion deform in the opening direction, and a protrusion caused by the deformation of the pressure relief portion may not affect an electrode assembly in a battery.

In the above technical solution, the first surface is configured as an arc surface, so that the first surface is prone to deformation when subjected to an external impact, so as to absorb energy of the external impact, and reduce the influence of the external impact on the part where the pressure relief groove in the cap body is located.

In the above technical solution, the second surface is also configured as an arc surface, and the second surface and the first surface are bent in the same direction, so that the pressure relief portion forms an arched structure, which is beneficial to absorbing an external impact, thereby preventing the part where the pressure relief groove in the cap body is located from being damaged due to the external impact to a certain extent, preventing the pressure relief portion from being opened when the internal pressure of the battery cell does not reach the initiation pressure to ensure that the normal pressure relief function can be implemented.

In the technical solution, in the thickness direction, the two ends of the pressure relief portion in the first direction are closer to the inner surface than the middle of the pressure relief portion in the first direction. That is, in the thickness direction, the middle of the pressure relief portion in the first direction is farther away from the inner surface than the two ends of the pressure relief portion in the first direction. Since the distance between the pressure relief portion and the inner surface in the thickness direction gradually increases from the two ends to the middle of the pressure relief portion in the first direction, the pressure relief portion has an arched cross section in a plane determined by the first direction and the thickness direction, which can well absorb the energy of the external impact.

In some embodiments of the current disclosure, the end cap comprises a first protrusion, and the first protrusion is arranged on the outer surface in a protruding manner and surrounds the pressure relief groove.

In the above technical solution, the first protrusion surrounding the pressure relief groove is provided on the end cap, so that when the end cap is subjected to an external impact, the first protrusion can absorb energy of the impact and prevent an impact force from being transmitted to the part where the pressure relief groove is located, so as to reduce the influence of the external impact on the part where the pressure relief groove in the cap body is located, prevent the part where the pressure relief groove in the cap body is located from being damaged due to the external impact to a certain extent, prevent the pressure relief portion from being opened when the internal pressure of the battery cell does not reach the initiation pressure, and ensure that the normal pressure relief function can be implemented.

In the above technical solution, the recess is provided on the end cap, and the pressure relief groove is provided in the bottom wall of the recess, so that the recess serves for thinning, and thus the thickness of the part where the pressure relief groove in the cap body is located is further reduced. When the internal pressure of the battery reaches the initiation pressure, the part where the pressure relief groove in the cap body is located is more easily opened by the internal pressure, thereby implementing pressure relief.

In the above technical solution, the arrangement of the recess makes the part where the pressure relief groove in the cap body is located more easily opened by the internal pressure, and also more easily opened by the external impact. Therefore, the first protrusion surrounding the pressure relief groove is arranged on the bottom wall, so that when the end cap is subjected to an external impact, the first protrusion may absorb energy of the impact and prevent an impact force from being transmitted to the part where the pressure relief groove is located, so as to reduce the influence of the external impact on the part where the pressure relief groove in the cap body is located, prevent the part where the pressure relief groove in the cap body is located from being damaged due to the external impact to a certain extent, that is, prevent the pressure relief portion from being opened when the internal pressure of the battery cell does not reach the initiation pressure to ensure that the normal pressure relief function can be implemented.

In the above technical solution, the arrangement of the recess makes part where the recess is located easily deform by means of an external impact. Therefore, the second protrusion corresponding to the recess in position and surrounding the pressure relief groove is arranged on the inner surface, so that when the end cap is subjected to an external impact, the second protrusion can absorb energy of the impact and prevent a impact force from being transmitted to the part where the pressure relief groove is located to a certain extent, so as to reduce the influence of the external impact on the part where the pressure relief groove in the cap body is located, and prevent the part where the pressure relief groove in the cap body is located from being damaged due to the external impact to a certain extent.

As an alternative technical solution of the embodiment of the present application, the length of the pressure relief portion in a second direction is greater than that of the pressure relief portion in the first direction, and the first direction, the second direction and the thickness direction are perpendicular to each other.

In the above technical solution, the length of the pressure relief portion in the second direction is greater than that thereof in the first direction, so that the pressure relief portion is of an elongated structure. In addition, the cross sections of the pressure relief portion in the first direction and the thickness direction are arched, so that the pressure relief portion can deform when subjected to an external impact, and thus well absorb energy of the impact, thereby preventing the part where the pressure relief groove in the cap body is located from being damaged due to the external impact.

As an alternative technical solution of the embodiment of the present application, the pressure relief groove is a closed groove extending along a closed trajectory that is connected end to end.

In the above technical solution, the pressure relief groove is configured as a closed groove, so that when the internal pressure of the battery reaches the initiation pressure, the internal pressure can open the part where the pressure relief groove in the cap body is located from all sides, thereby making the pressure relief faster and easier.

As an alternative technical solution of the embodiment of the present application, the pressure relief groove includes a first groove section, a second groove section, a third groove section and a fourth groove section that are connected in sequence; in the first direction, the first groove section and the third groove section are arranged opposite each other, and a maximum distance between the first groove section and the third groove section is a first distance; in the second direction, the second groove section and the fourth groove section are arranged opposite each other, and a minimum distance between the second groove section and the fourth groove section is a second distance; and the second distance is greater than the first distance, and the first direction, the second direction and the thickness direction are perpendicular to each other.

In the above technical solution, the first distance is the maximum distance between the first groove section and the third groove section in the first direction, and the second distance is the minimum distance between the second groove section and the fourth groove section in the second direction. If the minimum distance between the second groove section and the fourth groove section in the second direction is greater than the maximum distance between the first groove section and the third groove section in the first direction, it indicates that the distance between the second groove section and the fourth groove section in the second direction is greater than the distance between the first groove section and the third groove section in the first direction.

As an alternative technical solution of the embodiment of the present application, the first groove section and the third groove section are linear grooves; and/or the second groove section and the fourth groove section are arc grooves.

In the above technical solution, the first groove section and the third groove section are configured as linear grooves, and the second groove section and the fourth groove section are configured as arc grooves, so that stress concentration can be reduced. When the internal pressure of the battery reaches the initiation pressure, the part where the pressure relief groove in the cap body is located is more easily opened by the internal pressure, thereby implementing pressure relief.

As an alternative technical solution of the embodiment of the present application, the cap body partially protrudes in the thickness direction to form a bump, and the pressure relief groove is provided in the bump.

In the above technical solution, the cap body partially protrudes in the thickness direction of the cap body to form a bump, and a recessed space is correspondingly formed in a side of the cap body opposite the bump in the thickness direction of the cap body, so that on one hand, components inside the battery cell can be accommodated, thereby facilitating an increase in the energy density of the battery cell, and on the other hand, the bending strength of the end cap and the impact resistance of the end cap can be increased. In addition, because the pressure relief groove is provided in the bump, the pressure relief portion can be opened in time for pressure relief when the battery cell is subjected to thermal runaway.

In the above technical solution, the end cap is arranged on the side of the battery cell close to the bottom wall of the case, that is, the battery cell is inverted inside the case.

In a non-claimed aspect, an embodiment of the present application further provides a power consuming device, the power consuming device including a battery as described above, wherein the battery is configured to provide electric energy.

### Brief Description of the Drawings

In order to more clearly describe the technical solutions of the embodiments of the present application, the accompanying drawings required in the embodiments will be described briefly below. It should be understood that the following accompanying drawings illustrate only some embodiments of the present application and therefore should not be construed as a limitation on the scope thereof. For those of ordinary skill in the art, other relevant accompanying drawings can also be obtained from these accompanying drawings without any creative effort.
FIG. 1 is a schematic structural diagram of a vehicle according to some embodiments of the present application;
FIG. 2 is an exploded view of a battery according to some embodiments of the present application;
FIG. 3 is a schematic structural diagram of a battery cell according to some embodiments of the present application;
FIG. 4 is a schematic structural diagram of an end cap according to some embodiments of the present application;
FIG. 5 is a schematic top view of an end cap according to some embodiments of the present application;
FIG. 6 is a sectional view taken along line A-A of FIG. 5;
FIG. 7 is an enlarged view of part D of FIG. 6;
FIG. 8 is an enlarged view of part B of FIG. 5;
FIG. 9 is a sectional view taken along line C-C of FIG. 5;
FIG. 10 is a schematic structural diagram of an end cap according to some other embodiments of the present application;
FIG. 11 is a schematic top view of an end cap according to some other embodiments of the present application; and
FIG. 12 is a sectional view taken along line G-G of FIG. 11.

List of reference signs: 10 - Case; 11 - First portion; 12 - Second portion; 20 - Battery cell; 21 - End cap; 211 - Cap body; 2111 - Pressure relief portion; 21111 - First surface; 21112 - Second surface; 2112 - Outer surface; 2113 - Inner surface; 2114 - Bump; 212 - Pressure relief groove; 2121 - First groove section; 2122 - Second groove section; 2123 - Third groove section; 2124 - Fourth groove section; 213 - First protrusion; 214 - Recess; 215 - Second protrusion; 22 - Electrode assembly; 23 - Housing; 100 - Battery; 200 - Controller; 300 - Motor; 1000 - Vehicle.

### Detailed Description of Embodiments

In order to make the objectives, technical solutions and advantages of the embodiments of the present application clearer, the technical solutions in the embodiments of the present application will be described clearly below with reference to the accompanying drawings in the embodiments of the present application. Obviously, the embodiments described are some of, rather than all of, the embodiments of the present application.

Unless otherwise defined, all technical and scientific terms used in the present application have the same meanings as those commonly understood by those skilled in the art to which the present application belongs. The terms used in the description of the present application are merely for the purpose of describing specific embodiments, but are not intended to limit the present application. The terms "comprising" and "having" and any variations thereof in the description and the claims of the present application as well as the brief description of the accompanying drawings described above are intended to cover non-exclusive inclusion. The terms "first", "second", etc. in the description and the claims of the present application as well as the foregoing accompanying drawings are used to distinguish between different objects, rather than describing a specific order or a primary-secondary relationship.

In the present application, "embodiment" mentioned means that the specific features, structures and characteristics described in conjunction with the embodiments may be included in at least one embodiment of the present application. The phrase at various locations in the description does not necessarily refer to the same embodiment, or an independent or alternative embodiment exclusive of another embodiment.

In the description of the present application, it should be noted that, the terms "mount", "connected", "connect", or "attach" should be interpreted in a broad sense unless explicitly defined and limited otherwise. For example, they may be a fixed connection, a detachable connection, or an integral connection; or may be a direct connection, an indirect connection by means of an intermediate medium, or internal communication between two elements. For those of ordinary skills in the art, the specific meanings of the foregoing terms in the present application may be understood according to specific circumstances.

The term "and/or" in the present application is merely a description of the associated relationship of associated objects, representing that three relationships may exist, for example, A and/or B, may be expressed as: only A exists, both A and B exist, and only B exists. In addition, the character *"*/*"* in the present application generally indicates that the associated objects before and after the character are in a relationship of "or".

In the embodiments of the present application, the same reference numerals denote the same components, and for the sake of brevity, the detailed description of the same components is omitted in different embodiments. It should be understood that the dimensions, such as thickness, length and width, of the various components in the embodiments of the present application illustrated in the accompanying drawings, as well as the dimensions, such as an overall thickness, length and width, of an integrated apparatus are merely illustrative and should not be construed to limit the present application in any way.

"A plurality of" appearing in the present application means two or more (including two).

In the present application, a battery cell may include a lithium-ion secondary battery, a lithium-ion primary battery, a lithium-sulfur battery, a sodium/lithium-ion battery, a sodium-ion battery or a magnesium-ion battery, etc., which is not limited by the embodiments of the present application. The battery cell may be in the shape of a cylinder, a flat body, a cuboid, etc., which will also not be limited in the embodiments of the present application. The battery cells are generally classified into three types depending on the way of package: cylindrical battery cells, prismatic battery cells and pouch battery cells, which also will not be limited in the embodiments of the present application.

A battery mentioned in the embodiments of the present application refers to a single physical module including one or more battery cells to provide a high voltage and capacity. For example, the battery mentioned in the present application may include a battery module, a battery pack, etc. The battery generally includes a case for packaging one or more battery cells. The case can prevent liquid or other foreign matters from affecting charging or discharging of a battery cell.

The battery cell includes an electrode assembly and an electrolytic solution. The electrode assembly is composed of a positive electrode plate, a negative electrode plate and a separator. The operation of the battery cell mainly relies on the movement of metal ions between the positive electrode plate and the negative electrode plate. The positive electrode plate includes a positive current collector and a positive active material layer. A surface of the positive current collector is coated with the positive active material layer, the positive current collector not coated with the positive active material layer protrudes from the positive current collector coated with the positive active material layer, and the positive current collector not coated with the positive active material layer serves as a positive tab. Taking a lithium-ion battery as an example, the material of the positive current collector may be aluminum, and the positive active material may be lithium cobalt oxides, lithium iron phosphate, ternary lithium or lithium manganate, etc. The negative electrode plate includes a negative current collector and a negative active material layer. A surface of the negative current collector is coated with the negative active material layer, the negative current collector that is not coated with the negative active material layer protrudes from the negative current collector coated with the negative active material layer, and the negative current collector that is not coated with the negative active material layer is used as a negative tab. The negative current collector may be made of copper, and the negative active material may be carbon, silicon, etc. In order to ensure that no fusing occurs when a large current passes, a plurality of positive tabs are provided and are stacked together, and a plurality of negative tabs are provided and are stacked together. The separator may be made of PP (polypropylene), PE (polyethylene), etc. In addition, the electrode assembly may be of a wound structure or a laminated structure, which will not be limited in the embodiments of the present application.

Design factors on many aspects need to be simultaneously considered for the development of the battery technology, such as energy density, cycling life, discharge capacity, charge-discharge rate, and other performance parameters. In addition, the safety of the battery needs to be taken into account.

For a battery cell, in order to ensure the safety of the battery cell, a pressure relief structure may be provided on an end cap of the battery cell. For example, a pressure relief groove is provided in the end cap, and the pressure relief groove defines a pressure relief portion. When an internal pressure of the battery cell reaches an initiation pressure, the pressure relief portion is opened to release the internal pressure of the battery cell, so as to reduce the risk of explosion and fire of the battery cell.

The inventors have noted that in the case of an inverted cell, the pressure relief structure is often opened in advance, which leads to the failure to implement a normal pressure relief function.

The inventors have discovered by further studies that in the case of an inverted cell, an end cap is more vulnerable to an external impact, and an external impact force is easily transmitted to the part where the pressure relief structure is located, so that the pressure relief structure is opened in advance, leading to the failure to implement the normal pressure relief function.

In view of this, an embodiment of the present application provides an end cap, including a cap body and a pressure relief groove, wherein the pressure relief groove is formed in the cap body, and the pressure relief groove defines a pressure relief portion. The pressure relief portion is bent in a thickness direction of the cap body.

Since the pressure relief portion of the end cap is bent in the thickness direction of the cap body, when the end cap is subjected to an external impact, the pressure relief portion may deform in a bending direction, and thus absorb energy of the external impact, so as to reduce the influence of the external impact on the part where the pressure relief groove in the cap body is located, prevent the part where the pressure relief groove in the cap body is located from being damaged due to the external impact to a certain extent, and ensure that a normal pressure relief function can be implemented, that is, prevent the pressure relief portion from being opened when an internal pressure of the battery cell does not reach an initiation pressure to ensure the normal operation of the battery cell.

The technical solution described in the embodiments of the present application is applicable to a battery and a power consuming device using the battery.

The power consuming device may be a vehicle, a mobile phone, a portable device, a notebook computer, a ship, a spacecraft, an electric toy, an electric tool, etc. The spacecraft includes an airplane, a rocket, an aerospace plane, a spaceship, etc. The electric toy includes a stationary or mobile electric toy, such as a game machine, an electric toy car, an electric toy ship, and an electric toy airplane. The electric tool includes a metal cutting electric tool, a grinding electric tool, an assembling electric tool, and a railway electric tool, such as an electric drill, an electric grinder, an electric wrench, an electric screwdriver, an electric hammer, an electric impact drill, a concrete vibrator, and an electric planer. The power consuming devices mentioned above are not specially limited in the embodiments of the present application.

For ease of description, an example in which the power consuming device refers to a vehicle 1000 is used for description in the following embodiments.

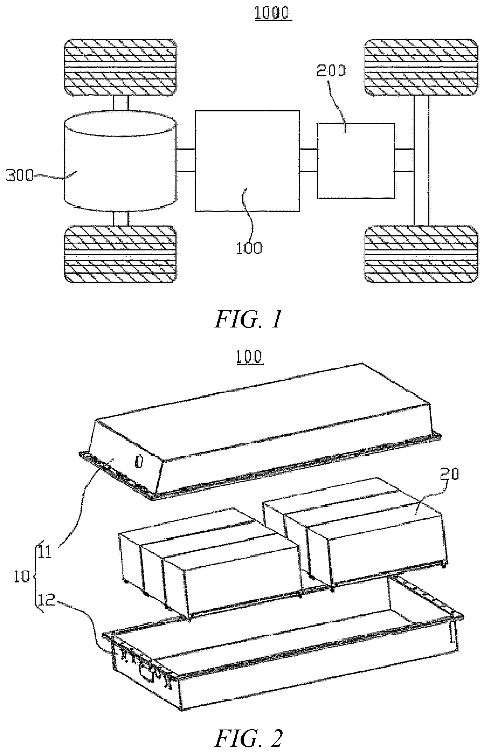

Referring to FIG. 1, FIG. 1 is a schematic structural diagram of a vehicle 1000 provided in some embodiments of the present application. The vehicle 1000 may be a fuel vehicle, a gas vehicle, or a new energy vehicle. The new energy vehicle may be a battery electric vehicle, a hybrid electric vehicle, an extended-range vehicle, etc. A battery 100 is provided inside the vehicle 1000, and the battery 100 may be provided at the bottom, the front or the back of the vehicle 1000. The battery 100 may be configured to supply power to the vehicle 1000. For example, the battery 100 may be used as a power supply for operating the vehicle 1000. The vehicle 1000 may further include a controller 200 and a motor 300. The controller 200 is configured to control the battery 100 to supply power to the motor 300, for example, to meet working power requirements during starting, navigation and traveling of the vehicle 1000.

In some embodiments of the present application, the battery 100 can not only serve as a power supply for operating the vehicle 1000, but also serve as a power supply for driving the vehicle 1000, instead of or partially instead of fuel or natural gas, to provide driving power for the vehicle 1000.

Referring to FIG. 2, FIG. 2 is an exploded view of the battery 100 provided in some embodiments of the present application. The battery 100 includes a case 10 and battery cells 20. The battery cells 20 are accommodated in the case 10. The case 10 is configured to provide an accommodation space for the battery cells 20, and the case 10 may have various structures. In some embodiments, the case 10 may include a first portion 11 and a second portion 12. The first portion 11 and the second portion 12 cover each other, and the first portion 11 and the second portion 12 jointly define the accommodation space for accommodating the battery cells 20. The second portion 12 may be of a hollow structure with one end open, the first portion 11 may be of a plate-like structure, and the first portion 11 covers an open side of the second portion 12 such that the first portion 11 and the second portion 12 jointly define the accommodation space; and the first portion 11 and the second portion 12 may also be of a hollow structure with one side open, and an open side of the first portion 11 covers the open side of the second portion 12. Of course, the case 10 formed by the first portion 11 and the second portion 12 may be in various forms, such as a cylinder, a cuboid, etc.

In the battery 100, a plurality of battery cells 20 may be provided. The plurality of battery cells 20 may be connected in series, in parallel, or in series and parallel. The parallel-series connection means that the plurality of battery cells 20 are connected both in series and in parallel. The plurality of battery cells 20 may be directly connected together in series, or in parallel, or in series-parallel, and then a unit composed of the plurality of battery cells 20 is accommodated inside the case 10. Of course, the battery 100 may also be a unit accommodated in the case 10 that is formed by firstly connecting the plurality of battery cells 20 in series or in parallel or in series and parallel to battery modules, and then connecting the plurality of battery modules in series or in parallel or in series and parallel. The battery 100 may further include other structures. For example, the battery 100 may further include a busbar component for achieving electrical connections between the plurality of battery cells 20.

Each battery cell 20 may be a secondary battery cell or a primary battery cell, and may also be a lithium-sulfur battery cell, a sodium-ion battery cell, or a magnesium-ion battery cell, but is not limited thereto. The battery cell 20 may be in the form of a cylinder, a flat body, a cuboid, etc.

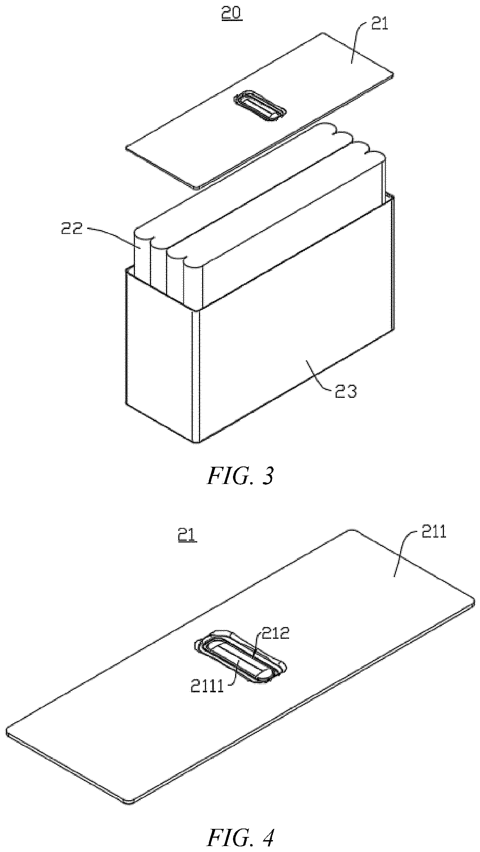

Referring to FIG. 3, FIG. 3 is a schematic exploded structural diagram of the battery cell 20 provided in some embodiments of the present application. The battery cell 20 refers to the smallest unit of the battery 100. As shown in FIG. 3, the battery cell 20 includes an end cap 21, an electrode assembly 22, a housing 23, and other functional components.

The end cap 21 refers to a component that covers an opening of the housing 23 to isolate internal environment of the battery cell 20 from external environment. Without limitation, the end cap 21 may be shaped to adapt to the shape of the housing 23 so as to fit with the housing 23. Optionally, the end cap 21 may be made of a material (e.g., an aluminum alloy) with certain hardness and strength, and thus the end cap 21 would not easily deform when subjected to squeezing or collision, so that the battery cell 20 can have a higher structural strength, and the safety performance can also be improved. Functional components, such as electrode terminals (not shown), may be provided on the end cap 21. The electrode terminals may be used for electrical connection to the electrode assembly 22 for outputting or inputting electric energy of the battery cell 20. The end cap 21 may also be made of various materials, such as copper, iron, aluminum, stainless steel, an aluminum alloy and plastic, which is not specially limited in the embodiments of the present application. In some embodiments, an insulating member may be further provided on an inner side of the end cap 21. The insulating member may be used to isolate electrical connection components inside the housing 23 from the end cap 21 in order to reduce the risk of short circuiting. Exemplarily, the insulating member may be made of plastic, rubber, etc.

The housing 23 is an assembly that is configured to fit with the end cap 21 so as to create the internal environment of the battery cell 20, wherein the created internal environment may be used for accommodating the electrode assembly 22, an electrolyte and other components. The housing 23 and the end cap 21 may be independent components, and the housing 23 may be provided with an opening, at which the end cap 21 covers the opening to create the internal environment of the battery cell 20. Without limitation, the end cap 21 and the housing 23 may also be integrated. Specifically, the end cap 21 and the housing 23 may firstly form a common connecting surface before other components are placed into the housing, and then the end cap 21 covers the housing 23 when the interior of the housing 23 needs to be packaged. The housing 23 may have various shapes and various sizes, for example, in the form of a cuboid, a cylinder, a hexagonal prism, etc. Specifically, the shape of the housing 23 may be determined depending on the specific shape and size of the electrode assembly 22. The housing 23 may be made of various materials, such as copper, iron, aluminum, stainless steel, an aluminum alloy, plastic, etc., which is not particularly limited in the embodiments of the present application.

The electrode assembly 22 is a component where an electrochemical reaction occurs in the battery cell 20. The housing 23 may include one or more electrode assemblies 22 therein. The electrode assembly 22 is mainly formed by winding or stacking a positive electrode plate and a negative electrode plate, and a separator is generally arranged between the positive electrode plate and the negative electrode plate. The portions of the positive electrode plate and the negative electrode plate that have an active material form a main body portion of the electrode assembly 22, and the portions of the positive electrode plate and the negative electrode plate that have no active material each form a tab. A positive tab and a negative tab may be both located at one end of the main body portion or respectively at two ends of the main body portion. During the charging and discharging of the battery 100, a positive active material and a negative active material react with the electrolyte, and the tabs are connected to the electrode terminals to form a current loop.

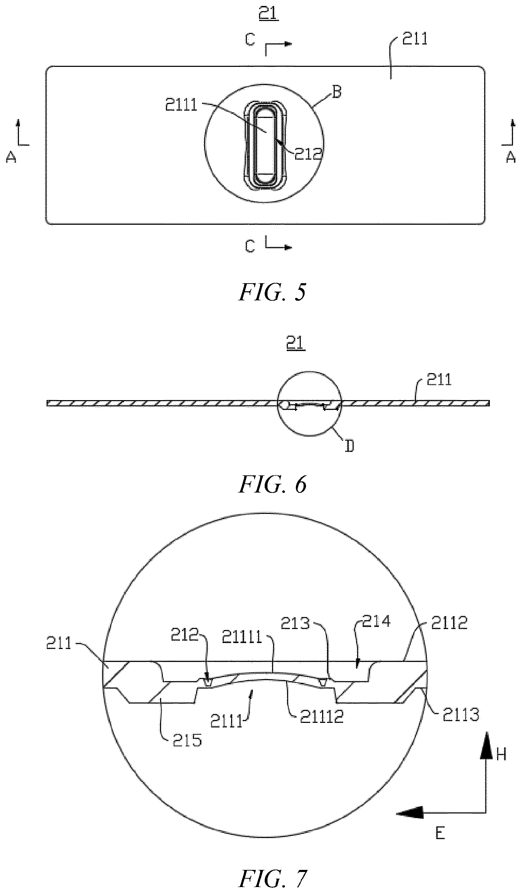

Referring to FIGS. 4, 5, 6 and 7, FIG. 4 is a schematic structural diagram of an end cap 21 provided in some embodiments of the present application. FIG. 5 is a schematic top view of an end cap 21 provided in some embodiments of the present application. FIG. 6 is a sectional view taken along line A-A of FIG. 5. FIG. 7 is an enlarged view of part D of FIG. 6. Some embodiments of the present application provide an end cap 21, the end cap 21 comprising a cap body 211 and a pressure relief groove 212. The cap body 211 is provided with a pressure relief portion 2111, the pressure relief groove 212 is provided in the cap body 211, and the pressure relief groove 212 delimits the pressure relief portion 2111. The pressure relief portion 2111 is bent in a thickness direction of the cap body 211.

The cap body 211 is a main structure of the end cap 21, and is mainly configured to close an opening of the housing 23. The cap body 211 is shaped to adapt to the shape of the opening of the housing 23. For example, when the opening of the housing 23 is rectangular, the cap body 211 is also rectangular. When the opening of the housing 23 is circular, the cap body 211 is also circular.

The pressure relief groove 212 may be formed in a variety of ways, such as stamping, and milling. The pressure relief groove 212 may be provided in a surface of the cap body 211 facing the interior of the housing 23, or may be provided in a surface of the cap body 211 that faces away from the housing 23. Taking the cap body 211 which is of a rectangular flat-plate structure as an example, the cap body 211 has an inner surface 2113 and an outer surface 2112 opposite each other in its thickness direction. The inner surface 2113 of the cap body 211 faces the interior of the housing 23, and the outer surface 2112 of the cap body 211 is arranged facing away from the housing 23. The pressure relief groove 212 may be provided in the inner surface 2113 of the cap body 211 or the outer surface 2112 of the cap body 211.

The pressure relief groove 212 may be a groove recessed from a surface of the cap body 211 in the thickness direction of the cap body 211 (a direction H as shown in FIG. 7), and the pressure relief portion 2111 is a portion of the cap body 211 delimited by an inner side surface of the groove. Taking an example in which the inner side surface of the groove is rectangular, the pressure relief portion 2111 is a rectangular portion of the cap body 211 delimited by the inner side surface of the pressure relief groove 212. The pressure relief groove 212 may also be a linear groove extending along a bending trajectory, for example, if the bending trajectory is a U-shaped trajectory, the pressure relief portion 2111 is a U-shaped portion of the cap body 211 delimited by the bending trajectory. As another example, if the bending trajectory is a rectangular trajectory, the pressure relief portion 2111 is a rectangular portion of the cap body 211 delimited by the bending trajectory. If the pressure relief groove 212 is a linear groove extending along the bending trajectory, when the internal pressure of the battery cell 20 reaches the initiation pressure, the pressure relief portion 2111 may be opened with the pressure relief groove 212 as a boundary, so as to release the internal pressure of the battery cell 20.

The expression "the pressure relief portion 2111 is bent in the thickness direction of the cap body 211" means that a middle portion of the pressure relief portion 2111 protrudes outwardly or is recessed inwardly in the thickness direction of the cap body 211 with an end of the pressure relief portion 2111 (the portion of the pressure relief portion 2111 close to the pressure relief groove 212) as a reference, so that the middle portion of the pressure relief portion 2111 is lower or higher than the end of the pressure relief portion 2111 in the thickness direction. It should be noted that "the pressure relief portion 2111 is bent in the thickness direction of the cap body 211" includes that one surface of the pressure relief portion 2111 in the thickness direction is bent in the thickness direction of the cap body 211, and that both of the surfaces of the pressure relief portion 2111 in the thickness direction are bent in the thickness direction of the cap body 211.

Since the pressure relief portion 2111 of the end cap 21 is bent in the thickness direction of the cap body 211, when the end cap 21 is subjected to an external impact, the pressure relief portion 2111 may deform in a bending direction, and thus absorb energy of the external impact, so as to reduce the influence of the external impact on the part where the pressure relief groove 212 in the cap body 211 is located, prevent the part where the pressure relief groove 212 in the cap body 211 is located from being damaged due to the external impact to a certain extent, and ensure that a normal pressure relief function can be implemented, that is, prevent the pressure relief portion 2111 from being opened when an internal pressure of the battery cell 20 does not reach an initiation pressure to ensure the normal operation of the battery cell 20.

In some embodiments, in the thickness direction, the cap body 211 has an inner surface 2113 and an outer surface 2112 opposite each other, and the pressure relief portion 2111 is bent in a direction from the inner surface 2113 to the outer surface 2112.

In the thickness direction, the cap body 211 has an inner surface 2113 and an outer surface 2112 opposite each other, wherein the inner surface 2113 is close to the housing 23, the outer surface 2112 is far from the housing 23, and the pressure relief portion 2111 is bent in a direction from the inner surface 2113 to the outer surface 2112.

The pressure relief portion 2111 is configured to bend in the direction from the inner surface 2113 to the outer surface 2112, that is, the pressure relief portion 2111 is bent in a direction in which the pressure relief portion is opened, so that when the end cap 21 is subjected to an external impact, the pressure relief portion 2111 deforms in the opening direction of the pressure relief portion, and a protrusion caused by the deformation of the pressure relief portion 2111 may not affect the electrode assembly 22 in the battery 100, thereby avoiding damages to the electrode assembly 22 when the pressure relief portion 2111 deforms. In addition, the pressure relief portion 2111 is configured to bend in the thickness direction and in the opening direction of the pressure relief portion, which reduces the occupation of internal space of the battery cell 20 (a space enclosed by the end cap 21 and the housing 23) and increases energy density.

In some other embodiments, in the thickness direction, the pressure relief portion 2111 is bent in a direction facing away from the opening direction of the pressure relief portion. In this way, the pressure relief portion 2111 may not protrude from the outer surface 2112 of the cap body 211, and is not prone to the abutment against other structures that otherwise results in stress concentration in other structures.

Referring to FIG. 7, in some embodiments, in the thickness direction, the pressure relief portion 2111 has a first surface 21111, wherein the first surface 21111 and the pressure relief groove 212 are located on the same side of the pressure relief portion 2111. The first surface 21111 is an arc surface.

In the thickness direction, the pressure relief portion 2111 has a first surface 21111 and a second surface 21112 opposite each other, wherein the first surface 21111 and the pressure relief groove 212 are located on the same side of the pressure relief portion 2111, and the second surface 21112 and the pressure relief groove 212 are located on two sides of the pressure relief portion 2111. Taking an example in which the pressure relief groove 212 is provided in the outer surface 2112 of the cap body 211, in the thickness direction, the first surface 21111 is a surface of the pressure relief portion 2111 away from the housing 23. As another example, if the pressure relief groove 212 is provided in the inner surface 2113 of the cap body 211, in the thickness direction, the first surface 21111 is a surface of the pressure relief portion 2111 close to the housing 23.

The first surface 21111 is configured as an arc surface, so that the first surface is prone to deformation when subjected to an external impact, so as to absorb energy of the external impact, and reduce the influence of the external impact on the part where the pressure relief groove 212 in the cap body 211 is located.

In some other embodiments, the first surface 21111 is an arc surface extending along a parabolic trajectory.

In some embodiments, in the thickness direction, the pressure relief portion 2111 has a second surface 21112 opposite the first surface 21111. The second surface 21112 is an arc surface, and the first surface 21111 and the second surface 21112 are bent in the same direction.

In the thickness direction, the first surface 21111 and the pressure relief groove 212 are located on the same side of the pressure relief portion 2111, and the second surface 21112 and the pressure relief groove 212 are located on two sides of the pressure relief portion 2111. Taking an example in which the pressure relief groove 212 is provided in the outer surface 2112 of the cap body 211, in the thickness direction, the second surface 21112 is a surface of the pressure relief portion 2111 close to the housing 23. As another example, if the pressure relief groove 212 is provided in the inner surface 2113 of the cap body 211, in the thickness direction, the second surface 21112 is a surface of the pressure relief portion 2111 away from the housing 23.

The second surface 21112 is also configured as an arc surface, and the second surface 21112 and the first surface 21111 are bent in the same direction, so that the pressure relief portion 2111 forms an arched structure, which is beneficial to absorbing an external impact, thereby preventing the part where the pressure relief groove 212 in the cap body 211 is located from being damaged due to the external impact to a certain extent, preventing the pressure relief portion 2111 from being opened when the internal pressure of the battery cell 20 does not reach the initiation pressure, and ensuring that the normal pressure relief function can be implemented.

In some other embodiments, the second surface 21112 is flat, and the second surface 21112 is flush with the inner surface 2113 of the cap body 211. In this way, only the first surface 21111 of the pressure relief portion 2111 needs to be machined into an arc surface, which can simplify manufacturing and facilitate the machining.

Referring to FIG. 7, in some embodiments, in the thickness direction, the cap body 211 has an inner surface 2113 and an outer surface 2112 opposite each other. A distance between the pressure relief portion 2111 and the inner surface 2113 in the thickness direction gradually increases from two ends to the middle of the pressure relief portion 2111 in a first direction. The first direction is perpendicular to the thickness direction.

The inner surface 2113 refers to a surface of the cap body 211 close to the housing 23, and the outer surface 2112 refers to a surface of the cap body 211 away from the housing 23. The direction from the inner surface 2113 to the outer surface 2112 is also the opening direction of the pressure relief portion 2111.

The first direction is perpendicular to the thickness direction. For example, referring to FIG. 7, the first direction is a direction E as shown in the figure.

In the first direction, the two ends of the pressure relief portion 2111 are close to the pressure relief groove 212, and the middle of the pressure relief portion 2111 is far away from the pressure relief groove 212.

"A distance between the pressure relief portion 2111 and the inner surface 2113 in the thickness direction gradually increases from two ends to the middle of the pressure relief portion 2111 in a first direction" means that in the first direction, the distance between the second surface 21112 of the pressure relief portion 2111 and the inner surface 2113 gradually increases from a part of the pressure relief portion 2111 close to the pressure relief groove 212 to a part of the pressure relief portion 2111 away from the pressure relief groove 212.

In the thickness direction, the two ends of the pressure relief portion 2111 in the first direction are closer to the inner surface 2113 than the middle of the pressure relief portion 2111 in the first direction. That is, in the thickness direction, the middle of the pressure relief portion 2111 in the first direction is farther away from the inner surface 2113 than the two ends of the pressure relief portion 2111 in the first direction. Since the distance between the pressure relief portion 2111 and the inner surface 2113 in the thickness direction gradually increases from the two ends to the middle of the pressure relief portion 2111 in the first direction, the pressure relief portion 2111 has an arched cross section in a plane determined by the first direction and the thickness direction, which can well absorb the energy of the external impact.

In some embodiments, the end cap 21 includes a first protrusion 213, and the first protrusion 213 is arranged on the outer surface 2112 in a protruding manner and surrounds the pressure relief groove 212.

The first protrusion 213 is a protruding structure protruding from the outer surface 2112 and arranged around the pressure relief groove 212. For example, the first protrusion 213 encloses a runway, and the pressure relief groove 212 is located within an inner ring of the runway. As another example, the first protrusion 213 encloses a rectangle. The pressure relief groove 212 is located inside of the first protrusion 213. As yet another example, if the pressure relief groove 212 is a U-shaped groove extending along a U-shaped trajectory, the first protrusion 213 may correspondingly form a U-shaped protrusion extending along the U-shaped trajectory to surround the pressure relief groove 212 inside of the first protrusion 213.

The first protrusion 213 surrounding the pressure relief groove 212 is provided on the end cap 21, so that when the end cap 21 is subjected to an external impact, the first protrusion 213 can absorb energy of the impact and prevent a impact force from being transmitted to the part where the pressure relief groove 212 is located, so as to reduce the influence of the external impact on the part where the pressure relief groove 212 in the cap body 211 is located, prevent the part where the pressure relief groove 212 in the cap body 211 is located from being damaged due to the external impact to a certain extent, prevent the pressure relief portion 2111 from being opened when the internal pressure of the battery cell 20 does not reach the initiation pressure, and ensure that the normal pressure relief function can be implemented.

In some embodiments, the end cap 21 includes a plurality of first protrusions 213, and the plurality of first protrusions 213 are arranged on the outer surface 2112 in a protruding manner and sequentially surround a periphery of the pressure relief groove 212. The arrangement of the plurality of first protrusions 213 improves the effect of absorbing impact energy, and prevents the impact force from being transmitted to the part where the pressure relief groove 212 in located, so as to reduce the influence of the external impact on the part where the pressure relief groove 212 in the cap body 211 is located.

Referring to FIG. 7, in some embodiments, the cap body 211 is provided with a recess 214, and the recess 214 is recessed from the outer surface 2112 in a direction close to the inner surface 2113. The pressure relief groove 212 is provided in a bottom wall of the recess 214.

The recess 214 refers to a groove structure that penetrates the outer surface 2112 of the cap body 211 and extends in a direction from the outer surface 2112 to the inner surface 2113. The shape of the recess 214 is not limited. For example, the recess 214 may be rectangular or circular.

The expression "the pressure relief groove 212 is provided in a bottom wall of the recess 214" means that the pressure relief groove 212 starts from the bottom wall, penetrates the bottom wall of the recess 214, and extends to the inner surface 2113 in the thickness direction.

The recess 214 is provided on the end cap 21, and the pressure relief groove 212 is provided in the bottom wall of the recess 214, so that the recess 214 serves for thinning, and thus the thickness of the part where the pressure relief groove 212 in the cap body 211 is located is further reduced. When the internal pressure of the battery 100 reaches the initiation pressure, the part where the pressure relief groove 212 in the cap body 211 is located is more easily opened by the internal pressure, thereby implementing pressure relief.

Referring to FIG. 7, in some embodiments, the end cap 21 includes a first protrusion 213, and the first protrusion 213 is arranged on the bottom wall in a protruding manner and surrounds the pressure relief groove 212.

The first protrusion 213 is a protruding structure protruding from the bottom wall of the recess 214 and arranged around the pressure relief groove 212. For example, the first protrusion 213 encloses a runway, and the pressure relief groove 212 is located within an inner ring of the runway. As another example, the first protrusion 213 encloses a rectangle. The pressure relief groove 212 is located inside of the first protrusion 213. As yet another example, if the pressure relief groove 212 is a U-shaped groove extending along a U-shaped trajectory, the first protrusion 213 may correspondingly form a U-shaped protrusion extending along the U-shaped trajectory to surround the pressure relief groove 212 inside of the first protrusion 213.

The arrangement of the recess 214 makes the part where the pressure relief groove 212 in the cap body 211 is located is more easily opened by the internal pressure, and also more easily opened by the external impact. Therefore, the first protrusion 213 surrounding the pressure relief groove 212 is arranged on the bottom wall, so that when the end cap 21 is subjected to an external impact, the first protrusion 213 may absorb energy of the impact and prevent an impact force from being transmitted to the part where the pressure relief groove 212 is located, so as to reduce the influence of the external impact on the part where the pressure relief groove 212 in the cap body 211 is located, prevent the part where the pressure relief groove 212 in the cap body 211 is located from being damaged due to the external impact to a certain extent, that is, prevent the pressure relief portion 2111 from being opened when the internal pressure of the battery cell 20 does not reach the initiation pressure to ensure that the normal pressure relief function can be implemented.

In some embodiments, the end cap 21 includes a plurality of first protrusions 213, and the plurality of first protrusions 213 are arranged on a bottom wall of the pressure relief groove 212 in a protruding manner and sequentially surround a periphery of the pressure relief groove 212. The arrangement of the plurality of first protrusions 213 improves the effect of absorbing impact energy, and prevents the impact force from being transmitted to the part where the pressure relief groove 212 in located, so as to reduce the influence of the external impact on the part where the pressure relief groove 212 in the cap body 211 is located.

Referring to FIG. 7, in some embodiments, the end cap 21 includes a second protrusion 215, and the second protrusion 215 is arranged on the inner surface 2113 in a protruding manner. The second protrusion 215 corresponds to the recess 214 in position and is arranged around the pressure relief groove 212.

The second protrusion 215 is a protruding structure protruding from the inner surface 2113. It should be noted that the position of the second protrusion 215 arranged on the inner surface 2113 in a protruding manner corresponds to the position of the recess 214 and the second protrusion 215 surrounds the pressure relief groove 212. Herein, the expression "the second protrusion 215 corresponds to the recess 214 in position" means that in the thickness direction, a projection of the outline of the recess 214 falls within the projection range of the second protrusion 215.

The second protrusion 215 and the first protrusion 213 are respectively located on two sides of the pressure relief portion 2111 in the thickness direction. The second protrusion 215 is shaped to adapt to the shape of the recess 214. For example, if the recess 214 is a rectangular groove, the second protrusion 215 encloses a rectangular structure.

The arrangement of the recess 214 makes part where the recess 214 is located easily deform by means of an external impact. Therefore, the second protrusion 215 corresponding to the recess 214 in position and surrounding the pressure relief groove 212 is arranged on the inner surface 2113, so that when the end cap 21 is subjected to an external impact, the second protrusion 215 can absorb energy of the impact and prevent a impact force from being transmitted to the part where the pressure relief groove 212 is located to a certain extent, so as to reduce the influence of the external impact on the part where the pressure relief groove 212 in the cap body 211 is located, and prevent the part where the pressure relief groove 212 in the cap body 211 is located from being damaged due to the external impact to a certain extent.

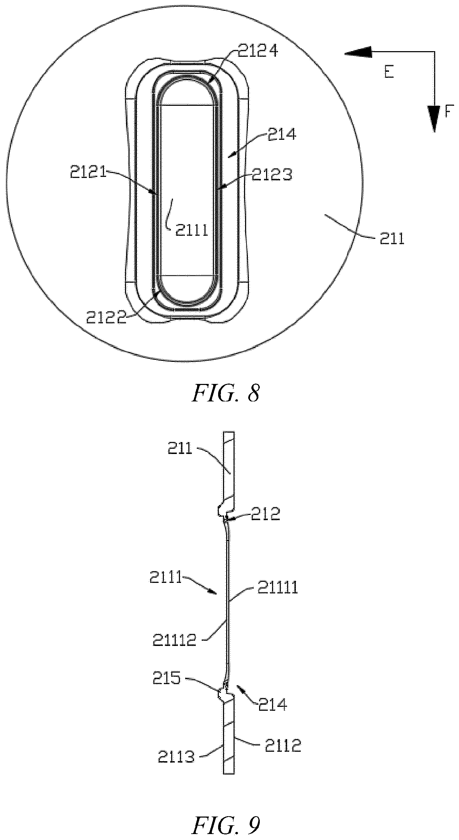

Referring to FIG. 8, FIG. 8 is an enlarged view of a part B of FIG. 5. In some embodiments, the length of the pressure relief portion 2111 in a second direction is greater than that of the pressure relief portion 2111 in the first direction, and the first direction, the second direction and the thickness direction are perpendicular to each other.

Referring to FIG. 8, the second direction is a direction F as shown in FIG. 8. Herein, the length of the pressure relief portion 2111 in the second direction is greater than that of the pressure relief portion 2111 in the first direction, so that the pressure relief portion 2111 extends in the second direction and is substantially in a form of a strip. It can be understood that the second direction refers to the length direction of the pressure relief portion 2111, the first direction refers to the width direction of the pressure relief portion 2111, and the thickness direction of the pressure relief portion 2111 is the same as that of the cap body 211.

The length of the pressure relief portion 2111 in the second direction is greater than that thereof in the first direction, so that the pressure relief portion 2111 is of an elongated structure. In addition, the cross sections of the pressure relief portion 2111 in the first direction and the thickness direction are arched, so that the pressure relief portion 2111 can deform when subjected to an external impact, and thus well absorb energy of the impact, thereby preventing the part where the pressure relief groove 212 in the cap body 211 is located from being damaged due to the external impact.

Referring to FIG. 8, in some embodiments, the pressure relief groove 212 is a closed groove extending along a closed trajectory.

The closed trajectory is a trajectory connected end to end, such as a rectangular trajectory and an elliptical trajectory. Taking the formation of the pressure relief groove 212 by means of milling as an example, the cap body 211 may be machined along the closed trajectory to form the pressure relief groove 212.

In this embodiment, the pressure relief groove 212 is a closed groove. After the pressure relief portion 2111 is opened, the cap body 211 can form a relatively large opening portion in the position corresponding to the pressure relief portion 2111, thereby improving the pressure relief efficiency.

Referring to FIG. 8, in some embodiments, the pressure relief groove 212 includes a first groove section 2121, a second groove section 2122, a third groove section 2123 and a fourth groove section 2124 that are connected in sequence. In a first direction, the first groove section 2121 and the third groove section 2123 are arranged opposite each other, and a maximum distance between the first groove section 2121 and the third groove section 2123 is a first distance. In a second direction, the second groove section 2122 and the fourth groove section 2124 are arranged opposite each other, and a minimum distance between the second groove section 2122 and the fourth groove section 2124 is a second distance. The second distance is greater than the first distance, and the first direction, the second direction and the thickness direction are perpendicular to each other.

The first groove section 2121, the second groove section 2122, the third groove section 2123 and the fourth groove section 2124 are respectively groove sections of the pressure relief groove 212 in four different orientations. In this embodiment, the shapes of the first groove section 2121, the second groove section 2122, the third groove section 2123 and the fourth groove section 2124 are not specially limited. For example, the first groove section 2121, the second groove section 2122, the third groove section 2123 and the fourth groove section 2124 may be linear grooves, or may be arc grooves. If the first groove section 2121, the second groove section 2122, the third groove section 2123 and the fourth groove section 2124 are linear grooves, the first groove section 2121 and the third groove section 2123 may or may not be parallel to each other, and the second groove section 2122 and the fourth groove section 2124 may or may not be parallel to each other.

The first groove section 2121 and the third groove section 2123 are arranged in parallel, and a maximum distance between the first groove section 2121 and the third groove section 2123 is equal to a minimum distance therebetween. The second groove section 2122 and the fourth groove section 2124 are arranged in parallel, and a maximum distance between the second groove section 2122 and the fourth groove section 2124 is equal to a minimum distance therebetween.

The second groove section 2122 and the fourth groove section 2124 are short sides of the pressure relief groove 212, and the first groove section 2121 and the third groove section 2123 are long sides of the pressure relief groove 212.

In this embodiment, the pressure relief portion 2111 delimited by the pressure relief groove 212 has a relatively large pressure relief area and is simple in structure and easy to form and manufacture.

Referring to FIG. 8, in some embodiments, the first groove section 2121 and the third groove section 2123 are linear grooves; and/or the second groove section 2122 and the fourth groove section 2124 are arc grooves.

The second groove section 2122 and the fourth groove section 2124 may be bent in the same direction or in opposite directions. The second groove section 2122 and the fourth groove section 2124 may be bent in directions close to each other, so that a circle center of the second groove section 2122 and a circle center of the fourth groove section 2124 are located outside the pressure relief portion 2111. The second groove section 2122 and the fourth groove section 2124 may also be bent in directions away from each other, so that the circle center of the second groove section 2122 and the circle center of the fourth groove section 2124 are located inside the pressure relief portion 2111.

Exemplarily, in FIG. 8, the second groove section 2122 and the fourth groove section 2124 are bent in directions away from each other, the first groove section 2121 and the third groove section 2123 are linear grooves extending in a second direction of the cap body 211, both the first groove section 2121 and the third groove section 2123 are tangent to the second groove section 2122, and both the first groove section 2121 and the third groove section 2123 are tangent to the fourth groove section 2124; in the second direction, a distance between the middle of the second groove section 2122 and the middle of the fourth groove section 2124 is a maximum distance between the second groove section 2122 and the fourth groove section 2124, and the length of the first groove section 2121 is a minimum distance between the second groove section 2122 and the fourth groove section 2124.

In this embodiment, the second groove section 2122 and the fourth groove section 2124 are arc grooves, the cap body 211 has a weakened part in each of the middle of the second groove section 2122 and the middle of the fourth groove section 2124, and the weakened parts are the parts of the pressure relief portion 2111 that are opened earliest, so that the pressure relief portion 2111 can be opened in time when the interior of the battery cell 20 reaches the initiation pressure. Both the first groove section 2121 and the third groove section 2123 are linear grooves extending in the second direction, so that the first groove section 2121 and the third groove section 2123 are arranged in parallel. After the cap body 211 is ruptured along the second groove section 2122 and the fourth groove section 2124, the cap body can be opened more easily along the first groove section 2121 and the third groove section 2123, thereby increasing the opening rate of the pressure relief portion 2111, and implementing rapid pressure relief.

Referring to FIG. 9, FIG. 9 is a sectional view taken along line C-C of FIG. 5. In some embodiments, in a second direction, the pressure relief portion 2111 has a flat and straight middle portion, and arc sections bent in a direction facing away from the opening direction (with the middle portion of the pressure relief portion 2111 as a reference, while if the pressure relief groove 212 is taken as a reference, each arc section is bent in the opening direction) at two ends thereof, and the two ends of the pressure relief portion 2111 each are connected to the pressure relief groove 212. The length of the arc section in the second direction matches the length of the second groove section 2122 in the second direction. The length of a flat and straight part of the middle portion of the pressure relief portion 2111 matches the length of the first groove section 2121 in the second direction.

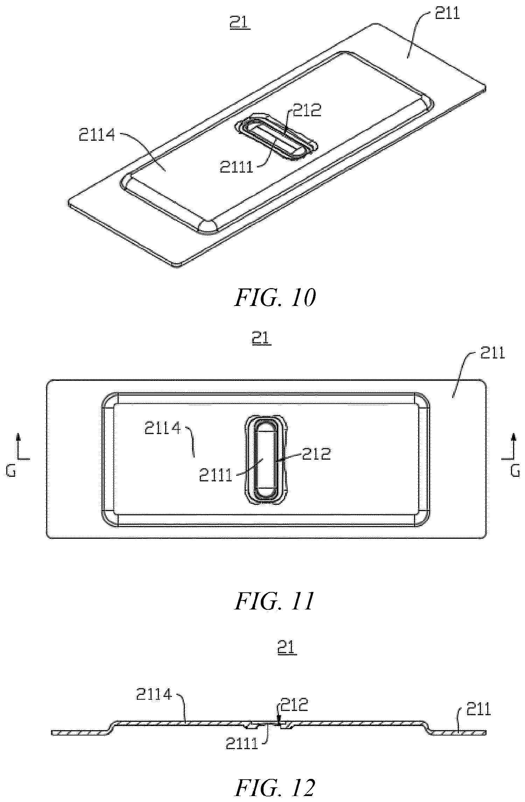

Referring to FIGS. 10, 11 and 12, FIG. 10 is a schematic structural diagram of an end cap 21 provided in some other embodiments of the present application. FIG. 11 is a schematic top view of an end cap 21 provided in some other embodiments of the present application. FIG. 12 is a sectional view taken along line G-G of FIG. 11. In some other embodiments, the cap body 211 partially protrudes in the thickness direction to form a bump 2114, and the pressure relief groove 212 is provided in the bump 2114.

The cap body 211 partially protrudes in the thickness direction of the cap body 211 to form a bump 2114, and a recessed space is correspondingly formed in a side of the cap body 211 opposite the bump 2114 in the thickness direction of the cap body, so that on one hand, components inside the battery cell 20 can be accommodated, thereby facilitating an increase in the energy density of the battery cell 20, and on the other hand, the bending strength of the end cap 21 and the impact resistance of the end cap 21 can be increased. In addition, because the pressure relief groove 212 is provided in the bump 2114, the pressure relief portion 2111 can be opened in time for pressure relief when the battery cell 20 is subjected to thermal runaway.

An embodiment of the present application further provides a battery cell 20, the battery cell 20 including an electrode assembly 22, a housing 23, and an end cap 21 as described above. The housing 23 has an accommodation space with one end open, the accommodation space being used for accommodating the electrode assembly 22. The end cap 21 is connected to the housing 23 and closes the opening.

An embodiment of the present application further provides a battery 100, the battery 100 including a case 10 and a battery cell 20 as described above, wherein the battery cell 20 is accommodated inside the case 10.

In some embodiments, the end cap 21 is arranged on a side of the battery cell 20 close to a bottom wall of the case 10.

The bottom wall of the case 10 is a wall of the case 10 opposite the open end of the case 10.

The end cap 21 is arranged on the side of the battery cell 20 close to the bottom wall of the case 10, that is, the battery cell 20 is inverted inside the case 10.

An embodiment of the present application further provides a power consuming device, the power consuming device including a battery 100 as described above, wherein the battery 100 is configured to provide electric energy.

According to some embodiments of the present application, reference is made to FIGS. 4 to 7.

An embodiment of the present application provides an end cap 21, the end cap 21 including a cap body 211 and a pressure relief groove 212, wherein the cap body 211 is provided with a pressure relief portion 2111. The pressure relief groove 212 is provided in the cap body 211, and the pressure relief groove 212 delimits the pressure relief portion 2111. The pressure relief portion 2111 is bent in a thickness direction of the cap body 211. In the thickness direction, the pressure relief portion 2111 is bent in an opening direction of the pressure relief portion. In the thickness direction, the pressure relief portion 2111 has a first surface 21111, wherein the first surface 21111 and the pressure relief groove 212 are located on the same side of the pressure relief portion 2111, and the first surface 21111 is an arc surface. In the thickness direction, the pressure relief portion 2111 has a second surface 21112 opposite the first surface 21111, wherein the second surface 21112 is an arc surface, and the first surface 21111 and the second surface 21112 are bent in the same direction. The cap body 211 is provided with a recess 214, the recess 214 is recessed from the outer surface 2112 in a direction close to the inner surface 2113, and the pressure relief groove 212 is provided in a bottom wall of the recess 214. The end cap 21 includes a first protrusion 213, and the first protrusion 213 is arranged on the bottom wall in a protruding manner and surrounds the pressure relief groove 212.

Since the pressure relief portion 2111 of the end cap 21 is bent in the thickness direction of the cap body 211, when the end cap 21 is subjected to an external impact, the pressure relief portion 2111 may deform in a bending direction, and thus absorb energy of the external impact, so as to reduce the influence of the external impact on the part where the pressure relief groove 212 in the cap body 211 is located, prevent the part where the pressure relief groove 212 in the cap body 211 is located from being damaged due to the external impact to a certain extent, and ensure that a normal pressure relief function can be implemented, that is, prevent the pressure relief portion 2111 from being opened when an internal pressure of the battery cell 20 does not reach an initiation pressure to ensure the normal operation of the battery cell 20. The pressure relief portion 2111 is configured to bend in the thickness direction and in the opening direction of the pressure relief portion, so that when the end cap 21 is subjected to an external impact, the pressure relief portion 2111 deforms in the opening direction, and a protrusion caused by the deformation of the pressure relief portion 2111 may not affect the electrode assembly 22 in the battery 100. The first surface 21111 and the second surface 21112 are configured as an arc surface, so that the first surface is prone to deformation when subjected to an external impact, so as to absorb energy of the external impact, and reduce the influence of the external impact on the part where the pressure relief groove 212 in the cap body 211 is located.

The recess 214 is provided on the end cap 21, and the pressure relief groove 212 is provided in the bottom wall of the recess 214, so that the recess 214 serves for thinning, and thus the thickness of the part where the pressure relief groove 212 in the cap body 211 is located is further reduced. When the internal pressure of the battery 100 reaches the initiation pressure, the part where the pressure relief groove 212 in the cap body 211 is located is more easily opened by the internal pressure, thereby implementing pressure relief. The arrangement of the recess 214 makes the part where the pressure relief groove 212 in the cap body 211 is located is more easily opened by the internal pressure, and also more easily opened by the external impact. Therefore, the first protrusion 213 surrounding the pressure relief groove 212 is arranged on the bottom wall, so that when the end cap 21 is subjected to an external impact, the first protrusion 213 may absorb energy of the impact and prevent an impact force from being transmitted to the part where the pressure relief groove 212 is located, so as to reduce the influence of the external impact on the part where the pressure relief groove 212 in the cap body 211 is located, prevent on the part where the pressure relief groove 212 in the cap body 211 is located from being damaged due to the external impact to ensure that the normal pressure relief function can be implemented.

It should be noted that the embodiments in the present application and features in the embodiments may be combined with each other without conflicts.

## Claims

1. A battery (100), **characterized by** comprising:
a case (10);
a battery cell (20), wherein the battery cell (20) is accommodated inside the case (10);
wherein the battery cell (20) comprising:
an electrode assembly (22);
a housing (23) having an accommodation space with one end open, the accommodation space being used for accommodating the electrode assembly (22); and
an end cap (21), wherein the end cap (21) is connected to the housing (23) and closes the opening, and the end cap (21) is arranged on a side of the battery cell (20) close to a bottom wall of the case (10);
wherein the end cap (21) comprising:
a cap body (211) provided with a pressure relief portion (2111); **characterized by**
a pressure relief groove (212) provided in the cap body (211), the pressure relief groove (212) delimiting the pressure relief portion (2111);
wherein the pressure relief portion (2111) is bent in a thickness direction of the cap body (211);
in the thickness direction, the pressure relief portion (2111) has a first surface (21111), the first surface (21111) and the pressure relief groove (212) are located on the same side of the pressure relief portion (2111), and the first surface (21111) is an arc surface;
in the thickness direction, the pressure relief portion (2111) has a second surface (21112) opposite the first surface (21111), the second surface (21112) being an arc surface, and the first surface (21111) and the second surface (21112) are bent in the same direction;
in the thickness direction, the cap body (211) has an inner surface (2113) and an outer surface (2112) opposite each other; a distance between the pressure relief portion (2111) and the inner surface (2113) in the thickness direction gradually increases from two ends to the middle of the pressure relief portion (2111) in a first direction, and the first direction is perpendicular to the thickness direction;
the cap body (211) is provided with a recess (214) which is recessed (214) from the outer surface (2112) in a direction close to the inner surface (2113), and the pressure relief groove (212) is provided in a bottom wall of the recess (214);
the end cap (21) comprises a first protrusion (213), and the first protrusion (213) is arranged on the bottom wall in a protruding manner and surrounds the pressure relief groove (212); and
the end cap (21) comprises a second protrusion (215), wherein the second protrusion (215) is arranged on the inner surface (2113) in a protruding manner, and the second protrusion (215) corresponds to the recess (214) in position and is arranged around the pressure relief groove (212).

2. The battery (100) according to claim 1, **characterized in that** in the thickness direction, the cap body (211) has an inner surface (2113) and an outer surface (2112) opposite each other, and the pressure relief portion (2111) is bent in a direction from the inner surface (2113) to the outer surface (2112).

3. The battery (100) according to any one of claims 1-2, **characterized in that** the length of the pressure relief portion (2111) in a second direction is greater than that of the pressure relief portion (2111) in the first direction, and the first direction, the second direction and the thickness direction are perpendicular to each other.

4. The battery (100) according to any one of claims 1-3, **characterized in that** the pressure relief groove (212) is a closed groove extending along a closed trajectory that is connected end to end.

5. The battery (100) according to claim 4, **characterized in that** the pressure relief groove (212) comprises a first groove section (2121), a second groove section (2122), a third groove section (2123) and a fourth groove section (2124) that are connected in sequence;
in the first direction, the first groove section (2121) and the third groove section (2123) are arranged opposite each other, and a maximum distance between the first groove (2121) section and the third groove section (2123) is a first distance;
in the second direction, the second groove section (2122) and the fourth groove section (2124) are arranged opposite each other, and a minimum distance between the second groove section (2122) and the fourth groove section (2124) is a second distance; and
the second distance is greater than the first distance, and the first direction, the second direction and the thickness direction are perpendicular to each other.

6. The battery (100) according to claim 5, **characterized in that** the first groove section (2121) and the third groove section (2123) are linear grooves; and/or
the second groove section (2122) and the fourth groove section (2124) are arc grooves.

7. The battery (100) according to any one of claims 1-6, **characterized in that** the cap body (211) partially protrudes in the thickness direction to form a bump (2114), and the pressure relief groove (212) is provided in the bump (2114).

## Patentansprüche

1. Batterie (100), **dadurch gekennzeichnet, dass** sie Folgendes umfasst:
ein Gehäuse (10);
eine Batteriezelle (20), wobei die Batteriezelle (20) in dem Gehäuse (10) aufgenommen ist;
wobei die Batteriezelle (20) Folgendes umfasst:
eine Elektrodenanordnung (22);
eine Umhausung (23), die einen Aufnahmeraum mit einem offenen Ende aufweist, wobei der Aufnahmeraum zur Aufnahme der Elektrodenanordnung (22) verwendet wird; und
eine Endkappe (21), wobei die Endkappe (21) mit der Umhausung (23) verbunden ist und die Öffnung verschließt und wobei die Endkappe (21) an einer Seite der Batteriezelle (20) in der Nähe der Bodenwand des Gehäuses (10) angeordnet ist;
wobei die Endkappe (21) Folgendes umfasst:
einen Kappenkörper (211), der mit einem Druckentlastungsabschnitt (2111) versehen ist, **gekennzeichnet durch**
eine Druckentlastungsnut (212), die in dem Kappenkörper (211) vorgesehen ist, wobei die Druckentlastungsnut (212) den Druckentlastungsabschnitt (2111) begrenzt;
wobei der Druckentlastungsabschnitt (2111) in Dickenrichtung des Kappenkörpers (211) gekrümmt ist;
wobei der Druckentlastungsabschnitt (2111) in Dickenrichtung eine erste Fläche (21111) aufweist, wobei sich die erste Fläche (21111) und die Druckentlastungsnut (212) auf derselben Seite des Druckentlastungsabschnitts (2111) befinden und die erste Fläche (21111) eine Bogenfläche ist;
wobei der Druckentlastungsabschnitt (2111) in Dickenrichtung eine zweite Fläche (21112) aufweist, die der ersten Fläche (21111) entgegengesetzt ist, wobei die zweite Fläche (21112) eine Bogenfläche ist und die erste Fläche (21111) und die zweite Fläche (21112) in dieselbe Richtung gekrümmt sind;
wobei der Kappenkörper (211) in Dickenrichtung eine Innenfläche (2113) und eine Außenfläche (2112) aufweist, die einander entgegengesetzt sind; wobei der Abstand zwischen dem Druckentlastungsabschnitt (2111) und der Innenfläche (2113) in Dickenrichtung von zwei Enden zur Mitte des Druckentlastungsabschnitts (2111) in eine erste Richtung allmählich zunimmt und die erste Richtung senkrecht zur Dickenrichtung ist;
wobei der Kappenkörper (211) mit einer Aussparung (214) versehen ist, die von der Außenfläche (2112) in eine Richtung nahe der Innenfläche (2113) ausgespart (214) ist, und die Druckentlastungsnut (212) in einer Bodenwand der Aussparung (214) vorgesehen ist;
wobei die Endkappe (21) einen ersten Vorsprung (213) umfasst und der erste Vorsprung (213) vorstehend an der Bodenwand angeordnet ist und die Druckentlastungsnut (212) umgibt und
wobei die Endkappe (21) einen zweiten Vorsprung (215) umfasst, wobei der zweite Vorsprung (215) vorstehend an der Innenfläche (2113) angeordnet ist und der zweite Vorsprung (215) der Aussparung (214) in ihrer Position entspricht und um die Druckentlastungsnut (212) angeordnet ist.

2. Batterie (100) nach Anspruch 1, **dadurch gekennzeichnet, dass** der Kappenkörper (211) in Dickenrichtung eine Innenfläche (2113) und eine Außenfläche (2112) aufweist, die einander entgegengesetzt sind, und der Druckentlastungsabschnitt (2111) in eine Richtung von der Innenfläche (2113) zur Außenfläche (2112) gekrümmt ist.

3. Batterie (100) nach einem der Ansprüche 1-2, **dadurch gekennzeichnet, dass** die Länge des Druckentlastungsabschnitts (2111) in eine zweite Richtung größer ist als die des Druckentlastungsabschnitts (2111) in die erste Richtung und wobei die erste Richtung, die zweite Richtung und die Dickenrichtung senkrecht zueinander sind.

4. Batterie (100) nach einem der Ansprüche 1-3, **dadurch gekennzeichnet, dass** die Druckentlastungsnut (212) eine geschlossene Nut ist, die sich entlang einer geschlossenen Bahn erstreckt, wobei ein Ende mit dem anderen Ende verbunden ist.

5. Batterie (100) nach Anspruch 4, **dadurch gekennzeichnet, dass** die Druckentlastungsnut (212) einen ersten Nutabschnitt (2121), einen zweiten Nutabschnitt (2122), einen dritten Nutabschnitt (2123) und einen vierten Nutabschnitt (2124) umfasst, die nacheinander verbunden sind;
wobei der erste Nutabschnitt (2121) und der dritte Nutabschnitt (2123) in die erste Richtung einander entgegengesetzt angeordnet sind und der Maximalabstand zwischen dem ersten Nutabschnitt (2121) und dem dritten Nutabschnitt (2123) ein erster Abstand ist;
wobei der zweite Nutabschnitt (2122) und der vierte Nutabschnitt (2124) in die zweite Richtung einander entgegengesetzt angeordnet sind und der Minimalabstand zwischen dem zweiten Nutabschnitt (2122) und dem vierten Nutabschnitt (2124) ein zweiter Abstand ist; und
der zweite Abstand größer als der erste Abstand ist und wobei die erste Richtung, die zweite Richtung und die Dickenrichtung senkrecht zueinander sind.

6. Batterie (100) nach Anspruch 5, **dadurch gekennzeichnet, dass** der erste Nutabschnitt (2121) und der dritte Nutabschnitt (2123) lineare Nuten sind und/oder
der zweite Nutabschnitt (2122) und der vierte Nutabschnitt (2124) bogenförmige Nuten sind.

7. Batterie (100) nach einem der Ansprüche 1-6, **dadurch gekennzeichnet, dass** der Kappenkörper (211) teilweise in Dickenrichtung vorsteht, um eine Wölbung (2114) auszubilden, und die Druckentlastungsnut (212) in der Wölbung (2114) vorgesehen ist.

## Revendications

1. Batterie (100), **caractérisée en ce qu'**elle comprend :
un boîtier (10) ;
un élément de batterie (20), l'élément de batterie (20) étant logé à l'intérieur du boîtier (10) ;
l'élément de batterie (20) comprenant :
un ensemble à électrodes (22) ;
une enveloppe (23) comportant un espace de réception avec une extrémité ouverte, l'espace de réception étant destiné à recevoir l'ensemble à électrodes (22) ; et
un couvercle d'extrémité (21), le couvercle d'extrémité (21) étant raccordé à l'enveloppe (23) et fermant l'ouverture, et le couvercle d'extrémité (21) étant placé sur un côté de l'élément de batterie (20) proche d'une paroi inférieure du boîtier (10) ;
le couvercle d'extrémité (21) comprenant :
un corps de couvercle (211) pourvu d'une partie de décompression (2111) ; **caractérisée par**
une rainure de décompression (212) formée dans le corps de couvercle (211), la rainure de décompression (212) délimitant la partie de décompression (2111) ;
la partie de décompression (2111) étant courbée dans une direction d'épaisseur du corps de couvercle (211) ;
la partie de décompression (2111) comportant, dans la direction d'épaisseur, une première surface (21111), la première surface (21111) et la rainure de décompression (212) étant situées du même côté de la partie de décompression (2111), et la première surface (21111) étant une surface arquée ;
la partie de décompression (2111) comportant, dans la direction d'épaisseur, une seconde surface (21112), à l'opposé de la première surface (21111), la seconde surface (21112) étant une surface arquée, et la première surface (21111) et la seconde surface (21112) étant courbées dans la même direction ;
le corps de couvercle (211) comportant, dans la direction d'épaisseur, une surface intérieure (2113) et une surface extérieure (2112) à l'opposé l'une de l'autre ; une distance entre la partie de décompression (2111) et la surface intérieure (2113) dans la direction d'épaisseur augmentant progressivement depuis deux extrémités vers le milieu de la partie de décompression (2111) dans une première direction, et la première direction étant perpendiculaire à la direction d'épaisseur ;
le corps de couvercle (211) étant pourvu d'un renfoncement (214) s'étendant depuis la surface extérieure (2112) dans une direction se rapprochant de la surface intérieure (2113), et la rainure de décompression (212) étant formée dans une paroi inférieure du renfoncement (214) ;
le couvercle d'extrémité (21) comprenant une première saillie (213), et la première saillie (213) étant formée sur la paroi inférieure de manière saillante et entourant la rainure de décompression (212) ; et
le couvercle d'extrémité (21) comprenant une seconde saillie (215), la seconde saillie (215) étant formée sur la surface intérieure (2113) de manière saillante, et la seconde saillie (215) correspondant au renfoncement (214) du point de vue de la position et étant formée autour de la rainure de décompression (212).

2. Batterie (100) selon la revendication 1, **caractérisée en ce que**, dans la direction d'épaisseur, le corps de couvercle (211) comporte une surface intérieure (2113) et une surface extérieure (2112) à l'opposé l'une de l'autre, et la partie de décompression (2111) est courbée dans une direction allant de la surface intérieure (2113) à la surface extérieure (2112).

3. Batterie (100) selon l'une ou l'autre des revendications 1 et 2, **caractérisée en ce que** la longueur de la partie de décompression (2111) dans une seconde direction est supérieure à celle de la partie de décompression (2111) dans la première direction, et la première direction, la seconde direction et la direction d'épaisseur sont perpendiculaires les unes aux autres.

4. Batterie (100) selon l'une quelconque des revendications 1 à 3, **caractérisée en ce que** la rainure de décompression (212) est une rainure fermée s'étendant le long d'une trajectoire fermée dont les extrémités se rejoignent.

5. Batterie (100) selon la revendication 4, **caractérisée en ce que** la rainure de décompression (212) comprend une première section de rainure (2121), une deuxième section de rainure (2122), une troisième section de rainure (2123) et une quatrième section de rainure (2124) reliées les unes à la suite des autres ;
dans la première direction, la première section de rainure (2121) et la troisième section de rainure (2123) sont placées en face l'une de l'autre, et une distance maximale entre la première section de rainure (2121) et la troisième section de rainure (2123) est une première distance ;
dans la seconde direction, la deuxième section de rainure (2122) et la quatrième section de rainure (2124) sont placées en face l'une de l'autre, et une distance minimale entre la deuxième section de rainure (2122) et la quatrième section de rainure (2124) est une seconde distance ; et
la seconde distance est supérieure à la première distance, et la première direction, la seconde direction et la direction d'épaisseur sont perpendiculaires les unes aux autres.

6. Batterie (100) selon la revendication 5, **caractérisée en ce que** la première section de rainure (2121) et la troisième section de rainure (2123) sont des rainures linéaires ; et/ou la deuxième section de rainure (2122) et la quatrième section de rainure (2124) sont des rainures arquées.

7. Batterie (100) selon l'une quelconque des revendications 1 à 6, **caractérisée en ce que** le corps de couvercle (211) fait partiellement saillie dans la direction d'épaisseur de façon à former un renflement (2114), et la rainure de décompression (212) est formée dans le renflement (2114).
